# DEMANDE DE BREVET EUROPEEN

(11) **EP 1 607 169 A1**
(43) Date de publication de la demande: **21.12.2005**
(21) Numéro de dépôt: 05291213.6
(22) Date de dépôt: 07.06.2005
(51) Int. Cl.: B23P 6/00, F01D 5/00, B23P 9/02, C21D 7/08, B24B 39/00

(54) **Procédé de réparation d'un élément d'aube**

(30) Priorité: 15.06.2004 FR 0406467
(71) Demandeur: SNECMA, 75015 Paris (FR)
(72) Inventeur: Ntsama-Etoundi, Marie-Christine, 91590 La Ferte Alais (FR); Pinto, Eric, 77930 Fleury en Biere (FR); Richin, Catherine, 91410 Roinville sous Dourdan (FR)
(74) Mandataire: Joly, Jean-Jacques

(57) **Abrégé**

Un procédé de réparation d'éléments d'aube, plus particulièrement des éléments d'aube (10; 100) dans une turbomachine, est prévu. Dans un exemple, une partie endommagée (20, 22) d'un élément d'aube (10) est découpée de l'élément d'aube, par exemple par fraisage. L'étendue de la partie découpée (20', 22') correspond généralement en taille et/ou en forme à la zone endommagée (20, 22). Une partie de remplacement (20", 22") est alors soudée en place dans le vide résultant dans l'élément d'aube. Le cordon de soudure résultant (28, 30) est alors bruni ou roulé en profondeur ou galeté afin de travailler à froid la matière d'élément d'aube au niveau du cordon de soudure. Ceci induit des contraintes résiduelles de compression dans l'élément d'aube qui contrecarrent les contraintes résiduelles de tension dans et autour du cordon de soudure provoqué par la soudure, et renforce par conséquent la structure réparée résultante. Le processus divulgué est particulièrement utile pour réparer des disques à aube (disques à aube monoblocs) où des aubes individuelles ne peuvent pas être enlevées pour remplacement ou réparation.

## Description

La présente invention se rapporte à des procédés de réparation d'éléments d'aube métalliques et, plus généralement, des éléments en forme d'aube métalliques ayant généralement une forme en coupe avec une largeur efficace qui est sensiblement plus grande que son épaisseur. La présente invention se rapporte plus particulièrement, mais pas uniquement, à des éléments d'aube aérodynamiques utilisés dans des turbomachines telles que des turbines, des moteurs d'avion, et équivalent.

De nombreux dispositifs connus utilisent des éléments à aube, comme par exemple des turbines, des moteurs d'avion à réaction, et équivalent. De plus, en fonction de l'application, ces éléments à aube sont fabriqués en métal ou en alliages métalliques spéciaux, et peuvent être globalement coûteux à fabriquer, entretenir, et réparer. Cependant, avec le temps et au cours du fonctionnement normal, ces aubes sont sujettes généralement à un endommagement dû au vieillissement et à l'usure. Elles éprouvent également de manière occasionnelle un endommagement dû à des facteurs externes tels qu'un endommagement par un corps étranger dans des moteurs d'avion à réaction, des problèmes se produisant pendant la fabrication des parties constitutives ou pendant l'assemblage, et des défauts de conception. L'endommagement peut également comprendre une déformation thermique et mécanique, un endommagement provoqué par une vibration lors du fonctionnement, et un endommagement provoqué par la surchauffe lors du fonctionnement.

L'endommagement peut être sous la forme, par exemple, de piqûres, de trous, de fissures, et d'autres défauts qui peuvent être visibles ou non à l'oeil nu. Un tel endommagement doit être traité rapidement de telle sorte qu'il ne conduise pas à de graves problèmes tels qu'une défaillance de structure générale, qui crée un fort potentiel de dommage aux biens et aux personnes.

Même si l'endommagement physique des aubes peut être relativement localisé, la pratique courante est de jeter une aube entière ayant une zone endommagée isolée plutôt que de la réparer. Ceci est bien sûr assez coûteux, surtout si une partie significative de l'aube est toujours structurellement saine.

En outre, avec l'arrivée des disques à aube (qui sont parfois appelés « blisks » en terme de métier, et sont parfois également connus dans le métier sous le nom de « disques aubagés monobloc »), l'incapacité d'exécuter des réparations locales devient très coûteuse dès lors qu'il convient alors de remplacer un ensemble de blisk entier. En général, les procédés de réparation qui prévoient de séparer une aube de son moyeu sont par définition incompatibles avec la structure de blisk. Il en résulte qu'un blisk entier peut être mis au rebut alors que seules quelques unes de ses aubes sont endommagées.

Certaines techniques de réparation sont connues de manière conventionnelle. Par exemple, le document US 5 584 662 décrit le remplissage d'un vide formé dans une aube en utilisant une matière de brasage semblable à celle constituant l'aube. Un grenaillage à laser est alors utilisé pour induire des contraintes résiduelles de compression profondes (c'est-à-dire environ 508 à 1270 micromètres) dans la zone réparée.

Le document US 6 568 077 décrit également un procédé de réparation qui comprend l'usinage d'un zone endommagée en utilisant une fraiseuse afin de créer une entaille, suivi par le remplissage de l'entaille dans une étape de soudage, en utilisant une matière de remplissage sous forme de poudre ou de fil. Enfin, la partie réparée soudée est usinée afin de reconstituer des caractéristiques de forme appropriées. Un grenaillage à laser ou d'autres étapes post-réparation ne sont pas utilisés selon ce document du fait que la forme et la taille de l'entaille, et le procédé de soudage correspondant, sont choisis de manière à éviter des zones de contrainte maximum de l'aube.

Enfin, le document US 6 238 187 décrit un procédé de réparation dans lequel une zone endommagée localisée est découpée, par exemple, dans une aube de turbine. Il est préparé une pièce de remplacement qui est au moins globalement similaire en taille, forme, et caractéristiques mécaniques à la partie découpée. La pièce de remplacement est mise en place et soudée, et est ensuite mise en forme, si nécessaire, afin de se conformer à la géométrie globale de l'aube originale. Enfin, le document US 6 238 187 décrit que le grenaillage à laser « doit » être utilisé pour traiter le cordon de soudure et les zones adjacentes de façon à développer des contraintes résiduelles de compression dans la zone qui contrecarrent les champs de tension résiduels dans la matière provoqués par l'étape de soudage.

Cependant, le grenaillage à laser est relativement coûteux, prend du temps, est techniquement exigeant, et nécessite habituellement des coûts de démarrage significatifs, qui peuvent le rendre inacceptable pour certaines applications, comme cela est mentionné dans le document US 6 415 486.

Lorsque le grenaillage à laser n'est pas utilisé pour remédier aux effets de contrainte de tension du soudage, il est également connu de soumettre une partie réparée à un traitement thermique suivi d'un grenaillage. Les contraintes opposées induites en conséquence sont cependant relativement faibles.

De plus, il est connu dans l'art conventionnel que des procédés de brasage et autres procédés de remplissage souffrent parfois du fait que la matière de remplissage ne correspond pas aux caractéristiques mécaniques du métal constitutif original. En outre, cette approche signifie que le processus de réparation dépend de la nature de l'endommagement, de telle sorte qu'il devient difficile d'établir un protocole de réparation facilement reproductible.

Au vu de ce qui précède, la présente invention se rapporte d'une manière générale à un procédé de réparation d'un endommagement d'un élément d'aube métallique qui est plus économique que les procédés conventionnels discutés ci-dessus, en particulier en ce qui concerne l'utilisation du grenaillage à laser. Ainsi, la présente invention comprend, d'une manière générale, la découpe ou le retrait d'une autre manière d'une partie endommagée de l'élément d'aube, le remplacement par une partie de remplacement de la partie enlevée, le soudage de la partie de remplacement mise en place, et le brunissage au moins du cordon de soudure résultant, si ce n'est toute la surface d'élément d'aube.

Le brunissage travaille de manière avantageuse à froid la matière de l'élément d'aube afin d'induire des contraintes de compression dans l'élément d'aube réparé. C'est une caractéristique particulière de la présente invention que le brunissage procure une alternative efficace mais économique au grenaillage à laser. Ces contraintes de compression contrecarrent des contraintes résiduelles dans la structure d'élément d'aube provoquées par le soudage de la partie de remplacement mise en place.

De préférence, la partie de remplacement a des caractéristiques matérielles qui correspondent étroitement à la matière constituant l'élément d'aube de telle sorte qu'un comportement mécanique approximativement correspondant peut être obtenu.

Le brunissage peut être réalisé avec un outil conventionnel approprié, comprenant un outil ayant, par exemple et sans limitation, une surface de brunissage fixe ou une surface de brunissage mobile. Dans le dernier cas, la surface de brunissage mobile peut être un élément de rouleau, tel que, mais pas nécessairement, un élément à bille supporté de manière appropriée afin de rouler librement (faisant, en fait, un outil de galetage).

La présente invention sera encore mieux comprise en se référant aux dessins annexés, dans lesquels :
Les figures 1 (a) à 1(f) illustrent un procédé de réparation de zones endommagées discrètes d'un élément d'aube métallique, tel qu'un élément d'aube dans un moteur de turbine, selon la présente invention;
Les figures 2(a) à 2(e) illustrent un procédé de réparation d'un élément d'aube métallique endommagé par remplacement d'une partie importante de l'élément d'aube, selon la présente invention;
Les figures 3 et 4 illustrent des exemples d'un outil de brunissage pour une utilisation selon la présente invention.

Il est à noter expressément ici que toutes les figures de la demande sont seulement des exemples, et ne sont pas limitatives. Par exemple, bien que seul un élément d'aube discret soit représenté dans les figures, la présente invention est également applicable, par exemple, à des configurations de disque aubagé monobloc (« blisk » ou « monobloc » ou « DAM ») où les éléments d'aube sont formés intégralement ou fixés d'une autre manière sur le disque central d'une manière connue.

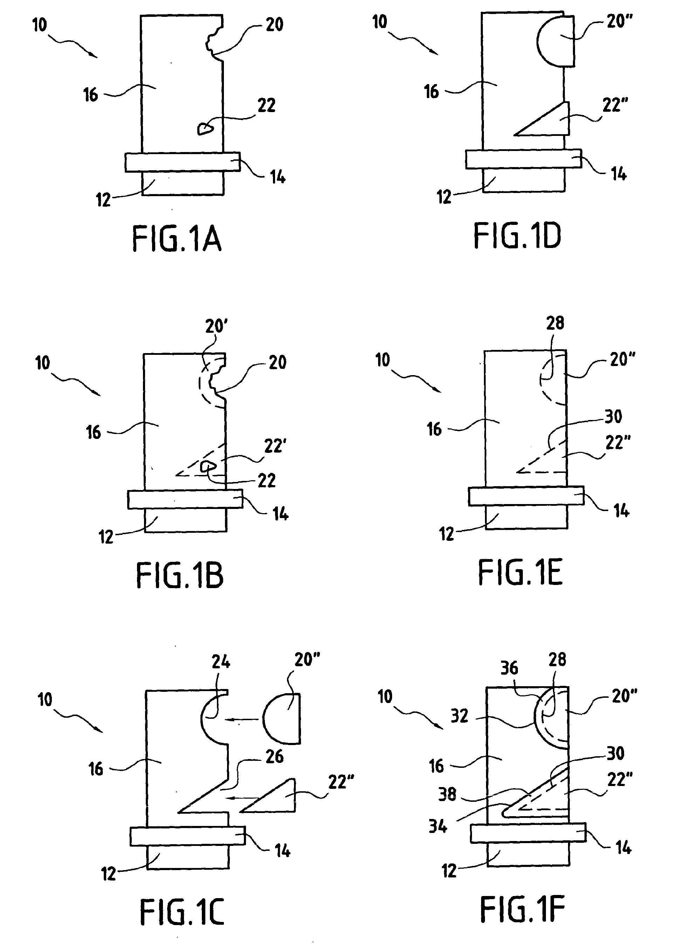

Dans une première forme de réalisation préférée de la présente invention, comme cela est illustré dans les figures 1(a) à 1(f), une zone endommagée localisée d'un élément d'aube est réparée en découpant une partie de l'élément d'aube recouvrant globalement l'étendue de la zone endommagée, et en remplaçant ensuite la partie découpée par une partie de remplacement formée d'une manière similaire. Ceci est généralement avantageux du fait que cela réduit au minimum la quantité de matière originale constitutive enlevée de l'élément d'aube, en aidant ainsi à maintenir en grande partie les caractéristiques mécaniques originales de l'élément d'aube.

Les figures 1(a) à 1(f) sont des vues schématiques de côté d'un élément d'aube généralisé 10, en particulier un élément d'aube utilisé dans une turbomachine, tel qu'un turboréacteur. Dans des applications de turbomachine, l'élément d'aube 10 est fabriqué à partir de n'importe quelle matière métallique appropriée, y compris des alliages métalliques. L'élément d'aube 10, comme cela est illustré, comprend, par exemple, un pied 12 pour le montage de l'élément d'aube 10 dans un disque (non représenté) d'une manière connue, par exemple un montage en queue d'aronde. Une plateforme 14 s'étend dans une direction globalement transversale et peut buter contre une plateforme correspondante d'un élément d'aube adjacent quand les éléments d'aube sont montés sur un disque. Un profil d'aile 16 s'étend vers l'extérieur depuis le pied 12 et la plateforme 14 d'une manière connue, et a un bord d'attaque indiqué d'une manière générale en 18. Le profil d'aile 16 peut avoir n'importe quel profil aérodynamique souhaité, dont les détails ne sont pas pertinents pour la présente invention. La figure 1(a) montre deux exemples extrêmement schématiques d'un endommagement d'élément d'aube : une partie de bord d'attaque endommagée 20, et une partie de surface endommagée 22.

Un endommagement du profil d'aile 16 peut se produire pour une variété de raisons connues incluant et sans y être limité un endommagement par un corps étranger, une fatigue mécanique provoquée par un cycle thermique et des forces centrifuges importantes lors du fonctionnement, des défauts de conception et/ou de fabrication, et une détérioration chimique provoquée par un environnement de fonctionnement. Les formes d'endommagement peuvent également varier, incluant sans limitation des perforations de surface (comme au niveau de la partie 22), des piqûres de bord (comme au niveau de la partie 20 du bord d'attaque), des piqûres de surface, des fissures radiées, et des fissures allongées. L'endommagement peut être visible à l'oeil, ou peut être invisible à l'oeil mais détectable par des procédés d'inspection technique conventionnels, comprenant, notamment, l'inspection acoustique ou par rayons X.

Comme cela est indiqué sur la figure 1(b), des zones localisées 20' et 22' correspondant aux parties endommagées 20 et 22, respectivement, sont identifiées. Comme cela a été noté ci-dessus, selon une forme de réalisation de l'invention prévue, les zones 20' et 22' correspondent au moins globalement en taille et/ou en forme aux parties endommagées. D'une part, on sait que des parties endommagées discrètes relativement grandes ou au moins visibles telles que 20 et 22 sont fréquemment associées à un endommagement invisible ou sinon pas tout à fait évident tout autour. Par conséquent, il est souhaitable d'enlever une partie de la matière de profil d'aile qui entoure les parties endommagées afin de traiter cette possibilité. D'autre part, il est souhaitable d'enlever aussi peu de matière constitutive que possible, (tout en gardant à l'esprit le problème précédent d'endommagement invisible), de façon à préserver, globalement, les caractéristiques mécaniques et métallurgiques originales de l'élément d'aube 10. La forme des zones 20' et 22' peut également dépendre de et être choisie en fonction des champs de contrainte particuliers présents dans un élément d'aube donné 10. Ces champs de contrainte peuvent être identifiés en utilisant des techniques de conception bien connues.

Les zones 20' et 22' peuvent être enlevées par n'importe quel procédé connu approprié pour les matières et l'environnement de travail en question. Toute référence à une « découpe » ou équivalent est censée englober n'importe quel procédé d'enlèvement approprié pour la structure et la matière constitutive en question, incluant mais sans y être limité la découpe en elle-même. La découpe en elle-même est possible selon la présente invention, mais peut dans certains cas avoir des effets secondaires négatifs sur la structure restante. Un autre exemple d'un procédé d'enlèvement approprié est le fraisage mécanique. Un autre exemple de procédé d'enlèvement approprié est la découpe par des procédés connus qui limitent de préférence la quantité de chaleur appliquée sur la matière. Une fois que les zones 20' et 22' sont enlevées, des vides 24 et 26 demeurent dans l'élément d'aube 10. Il est souhaitable, selon la présente invention, d'enlever les zones 20' et 22' d'une manière connue et reproductible de telle sorte que les géométries des vides résultants 24, 26 sont connues. Ceci facilite l'utilisation de parties de remplacement, comme cela a été discuté ci-dessus. Ainsi, par exemple, des procédés de commande numérique par ordinateur peuvent être utilisés d'une manière connue pour commander les exemples mentionnés ci-dessus de processus de fraisage ou de découpe.

La figure 1 (c) illustre la fourniture de parties de remplacement 20" et 22". Comme cela est discuté dans le document US 6 238 187, plus généralement, la création des parties de remplacement 20" et 22" est de préférence coordonnée avec le processus de découpe des zones 20' et 22' de telle sorte que les parties de remplacement 20" et 22" correspondent d'une manière générale aux vides résultants 24, 26. Par exemple, la géométrie des zones 20' et 22' peut être prédéfinie de façon à correspondre aux parties de remplacement prédéfinies 20" et 22", respectivement. Les parties de remplacement 20" et 22" peuvent par exemple être formées individuellement en tant qu'éléments de remplacement par des procédés connus tels que le moulage ou la coulée de la même matière métallique constituant l'élément d'aube 10. En variante, les parties de remplacement 20" et 22" peuvent être découpées dans un autre élément d'aube « jumeau » prévu spécialement pour être cannibalisé.

La figure 1(d) illustre des parties de remplacement 20" et 22" installées dans des vides correspondants 24 et 26, respectivement. Il est à noter que les parties de remplacement 20" et 22" peuvent être légèrement surdimensionnées par rapport aux vides 24 et 26 dans une ou plusieurs dimensions, en prévision d'un processus d'usinage postérieur. Il est préférable, au minimum, que les pièces de remplacement 20" et 22" soient surdimensionnées plutôt que sousdimensionnées. Le processus d'usinage postérieur peut comprendre, par exemple, le fraisage mécanique, le meulage manuel, ou les deux.

Des parties de remplacement 20" et 22" sont alors fixées en place par rapport à l'élément d'aube 10. Dans un exemple préféré, les parties de remplacement 20" et 22" sont fixées en place par un procédé de soudage approprié tel que, sans limitation, le soudage par faisceau d'électrons ou le soudage à l'arc tungstène-gaz.

Si les parties de remplacement 20" et 22" sont surdimensionnées par rapport à l'élément d'aube 10 (comme cela se voit sous une forme fortement exagérée dans la figure 1(d)), un processus d'usinage conventionnel tel qu'un fraisage, un meulage manuel, ou les deux, est alors réalisé afin de rendre les parties de remplacement mises en place et soudées 20" et 22" conformes en dimension avec l'élément d'aube 10. La figure 1(e) illustre le résultat d'un tel processus d'usinage conventionnel, laissant ainsi des cordons de soudure 28 et 30.

Cependant, le soudage des parties de remplacement 20" et 22" mises en place crée habituellement une contrainte de tension résiduelle dans la structure, au moins partiellement due aux effets thermiques du soudage. Ces contraintes de tension provoquent une faiblesse dans la zone soudée et une possibilité de défaillance de fatigue. Une autre source de faiblesse de matière est le cas où les parties de remplacement sont fabriquées à partir d'une matière ayant des propriétés qui ne correspondent pas à la matière d'élément d'aube d'origine.

Donc, il est souhaitable d'induire des contraintes de compression résiduelles dans la structure, par exemple, par travail à froid de la matière. Le travail à froid augmente avantageusement la résistance à la fatigue et contrecarre les contraintes de tension induites pendant le soudage. Selon la présente invention, le travail à froid est réalisé par brunissage de la zone et/ou des parties soudées adjacentes à celle-ci afin d'induire des contraintes de compression résiduelles souhaitées. Ici, la mention de « brunissage » selon la présente invention comprend le concept connu plus spécifique de « roulage profond » (c'est-à-dire un brunissage à des charges relativement élevées, par exemple de 100 à 400 bar (10⁷ Pa à 4x10⁷ Pa). En particulier, le roulage profond est connu pour fournir de manière significative davantage de travail à froid que, par exemple, le grenaillage de laser.

Dans un exemple de la présente invention, des contraintes de compression résiduelles sont induites à une profondeur d'environ 300 à environ 1000 micromètres dans la structure d'élément d'aube. De préférence, les contraintes de compression résiduelles sont induites à une profondeur d'au moins 800 micromètres.

Par conséquent, la figure 1(f) illustre des zones 36, 38 (définies par des traits pleins en 32, 34, respectivement) sur lesquelles un brunissage ou un roulage profond selon la présente invention est réalisé. Il est à noter ici que les zones 36, 38 telles qu'illustrées sur la figure 1(f) comprennent pratiquement la totalité des parties de remplacement 20" et 22", des cordons de soudure associés 28 et 30, et une zone relativement étroite de l'élément d'aube original 10 adjacente aux cordons de soudure 28 et 30. Cependant, il est également utile selon la présente invention de définir une zone de brunissage qui suit globalement les cordons de soudure 28 et 30 et comprend seulement une zone étroite de matière d'élément d'aube d'origine d'un côté et une zone étroite de matière de partie de remplacement de l'autre côté. De plus, dans un exemple de la présente invention, le brunissage est réalisé des deux côtés de l'élément d'aube 10 suivant les considérations précédentes. Plus spécialement, le brunissage réalisé des deux côtés peut être réalisé globalement simultanément en utilisant au moins deux outils de brunissage prévus sur des côtés respectifs de l'élément d'aube 10. L'outil de brunissage selon la présente invention est davantage discuté ci-dessous.

Le processus illustré dans et décrit en rapport avec les figures 1 (a) à 1 (f) est naturellement à titre d'illustration et non de limitation. Par exemple, une unique zone endommagée peut être traitée selon la présente invention, tout comme plus de deux zones endommagées peuvent être traitées.

La forme et la taille de la partie de l'élément d'aube 10 qui est enlevée ne doivent pas nécessairement se conformer exactement à celles de la partie endommagée de l'élément d'aube. Par exemple, une ou plusieurs formes découpées prédéfinies peuvent être utilisées, la prédéfinition de ces formes facilitant ainsi la préparation des parties de remplacement correspondantes. Il est souhaitable, néanmoins, d'enlever aussi peu de matière environnante que possible, contrebalancé par le fait que l'on admet qu'au moins une partie de l'élément d'aube 10 adjacente à des parties endommagées 20 et 22 peut avoir été soumise à un endommagement difficile ou impossible à voir, tel que des microfissures ou d'autres fractures invisibles. Il est également souhaitable de prendre en compte les champs de contrainte présents dans l'élément d'aube quand une partie endommagée est enlevée ou découpée, et il est préférable de définir des zones telles que 20' et 22' le long de zones à faible contrainte de l'élément d'aube 10. L'identification de zones à faible contrainte de cette manière est connue dans le domaine.

Enfin, il peut être souhaitable selon la présente invention de finir le processus de réparation par un grenaillage juste sur la partie réparée du profil d'aile 16 ou bien sur le profil d'aile 16 global d'une manière conventionnelle afin de reconstituer les contraintes de surface dans la matière et les rendre relativement uniformes.

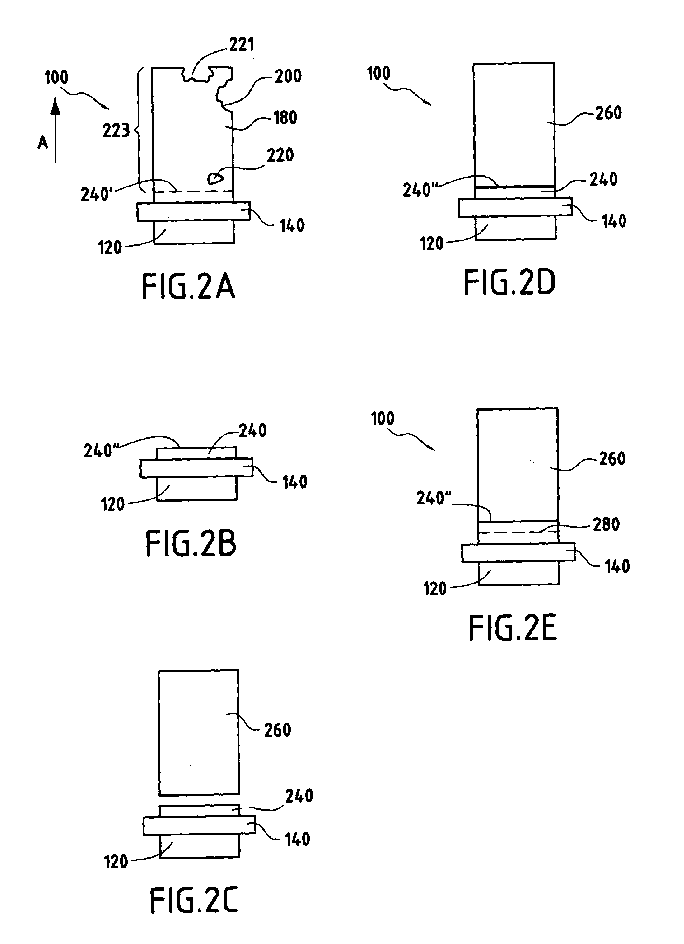

Dans certains cas, l'étendue cumulée d'un endommagement de l'élément d'aube peut être estimée trop grande pour des réparations localisées multiples comme cela a été décrit ci-dessus en rapport avec les figures 1(a) à 1 (f). Dans ce cas, il peut être nécessaire de remplacer une partie importante du profil d'aile de l'élément d'aube, comme cela est discuté en rapport avec les figures 2(a) à 2(e).

Les figures 2(a) à 2(e) sont également des vues schématiques de côté d'un élément d'aube généralisé 100, en particulier un élément d'aube utilisé dans une turbomachine, telle qu'un turboréacteur. Comme avec l'élément d'aube 10 discuté et décrit ci-dessus, l'élément d'aube 100 est de préférence fabriqué à partir de n'importe quelle matière métallique, y compris des alliages métalliques, appropriée pour des applications de turbomachine. L'élément d'aube 100, comme cela est illustré, comprend, par exemple, un pied 120 pour le montage de l'élément d'aube 100 dans un disque (non représenté) d'une manière connue, par exemple un ajustement à queue d'aronde. Une plateforme 140 s'étend dans une direction globalement transversale et peut buter contre une plateforme correspondante d'un élément d'aube adjacent quand les éléments d'aube sont montés sur un disque. Le profil d'aile 160 s'étend vers l'extérieur depuis le pied 120 et la plateforme 140 d'une manière connue, et a un bord d'attaque indiqué d'une manière générale en 180. Le profil d'aile 160 peut avoir n'importe quel profil aérodynamique souhaité, dont les détails ne sont pas pertinents pour la présente invention. La figure 2(a) montre trois exemples très schématiques d'un endommagement d'élément d'aube : une partie de bord d'attaque endommagée 200, une partie de surface endommagée 220, et une partie de bout endommagée 221.

Ici, si l'endommagement net du profil d'aile 160 est trop grand pour justifier (techniquement et/ou économiquement) des réparations localisées multiples comme cela a été discuté ci-dessus en rapport avec les figures 1 (a) à 1 (f), il peut alors être utile et/ou nécessaire d'enlever une partie importante 223 du profil d'aile 160 et de la remplacer d'une manière similaire à la procédure précédemment décrite.

Plus spécialement, la figure 2(b) illustre une structure restante une fois qu'une partie importante 223 (voir la figure 2(a)) du profil d'aile 160 comprenant les parties endommagées 200, 220, 221 a été enlevée, par exemple par découpe ou fraisage. La ligne 240' au niveau de laquelle la majeure partie du profil d'aile 160 est enlevée est de préférence un emplacement à faible contrainte par rapport aux contraintes présentées dans le profil d'aile. De plus, à la différence de la forme de réalisation de la présente invention décrite ci-dessus en rapport avec les figures 1(a) à 1(f), l'élément d'aube 100 est ici complètement coupé dans une direction transversale par rapport à la direction A (voir la figure 2(a)) dans laquelle s'étend l'élément d'aube 100. Sur la figure 2(b) on a représenté le moignon de profil d'aile 240 comprenant une surface coupée 240" sur laquelle une partie de remplacement est ensuite fixée.

La figure 2(c) illustre la fourniture d'une partie de profil d'aile de remplacement 260. Comme cela est représenté sur la figure 2(d), la partie de profil d'aile de remplacement 260 est fixée sur le moignon de profil d'aile 240, de nouveau de préférence par soudage (tel que le soudage par faisceau d'électrons) afin de former un cordon de soudure 240". Le soudage par friction à inertie, tel que ce terme est connu dans le domaine, peut également être utilisé pour fixer la partie de profil d'aile de remplacement 260 sur le moignon de profil d'aile 240 et est en particulier prévu pour réparer des structures de blisk.

La partie de profil d'aile de remplacement peut également être légèrement surdimensionnée (c'est-à-dire plus épaisse, plus large, et/ou plus grande) par rapport au moignon de profil d'aile 240. Dans ce cas, la partie de profil d'aile de remplacement surdimensionnée serait usinée d'une manière appropriée après avoir été soudée en place afin de se conformer à la configuration d'élément d'aube originale, d'une manière similaire au processus discuté et illustré ci-dessus dans les figures 1(d) et 1(e). Il est préférable qu'une partie de profil d'aile de remplacement soit surdimensionnée plutôt que sousdimensionnée par rapport au moignon de profil d'aile 240.

Une fois que la partie de profil d'aile de remplacement 260 est soudée en place (et usinée à la forme appropriée, si nécessaire), une zone 280 (figure 2(e)) du profil d'aile au niveau de ou au moins adjacente au cordon de soudure 240" est brunie ou roulée en profondeur d'une manière similaire à celle décrite ci-dessus en rapport avec les figures 1(a) à 1(f). Ce brunissage induit des contraintes de compression résiduelles dans l'élément d'aube afin de contrecarrer la contrainte de tension résiduelle provoquée lors du soudage de la partie de profil d'aile de remplacement 260 mise en place. Ici encore, il est important de provoquer un travail à froid suffisant pour renforcer le cordon de soudure 240" et la structure de matière afin de foumir une réparation d'aube durable et de bonne qualité. De préférence, des contraintes de compression résiduelles sont induites à une profondeur d'environ 300 à environ 1000 micromètres dans la structure d'élément d'aube. De préférence, les contraintes de compression résiduelles sont induites à une profondeur d'au moins 800 micromètres.

Comme cela a été discuté ci-dessus, le brunissage ou le roulage profond effectué selon la présente invention peut être réalisé avec n'importe quel outil de brunissage ou de roulage profond connu du moment qu'il peut effectuer le niveau souhaité de durcissement par travail à froid à la profondeur appropriée. L'outil choisi peut être appliqué sur une trajectoire non répétitive et/ou sans chevauchement sur la surface de profil d'aile ou bien il peut être appliqué d'une manière plus aléatoire qui peut comprendre des trajectoires qui se chevauchent une ou plusieurs fois. La trajectoire le long de laquelle le brunissage ou le roulage profond est réalisé peut être commandée et/ou définie par des procédés de commande d'outil connus, incluant par exemple, des procédés de commande numérique par ordinateur (« CNC »).

La pression appliquée par l'outil peut être constante sur toute la zone traitée, ou bien elle peut varier de manière sélective d'une façon continue ou discontinue. L'outil peut être équipé d'une pointe librement mobile telle qu'une bielle de roulement ou tout autre élément de pression de roulement, ou bien il peut comporter une tête de brunissage non mobile, habituellement de configuration arrondie.

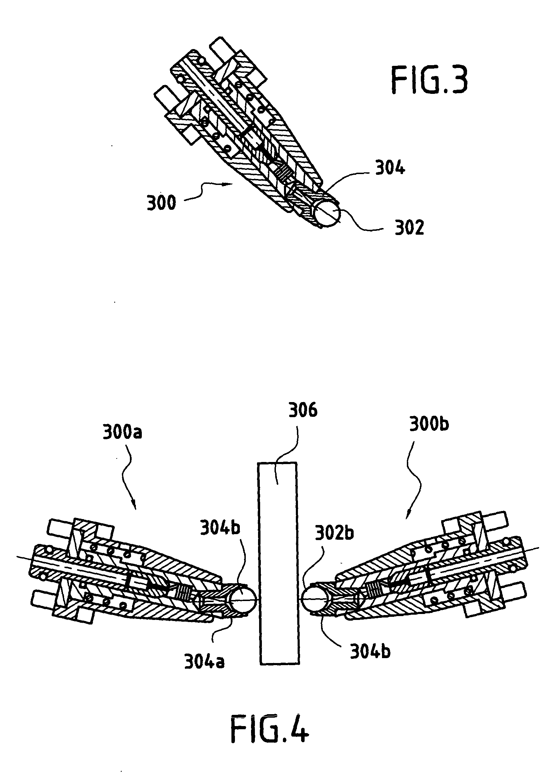

Des exemples d'outils de brunissage et de roulage profond à bille de roulement sont connus dans l'état de la technique et sont décrits, par exemple, dans les brevets US 4 947 668, US 5 826 453, et US 6 415 486, et dans la demande de brevet publiée US 2002/0174528. Ces outils prévoient, par exemple, un élément à bille sous la forme d'une embase de telle sorte que la bille est libre de rouler lorsque l'outil est déplacé par rapport à la surface qui est brunie (ou, plus précisément, galetée). La figure 3 illustre, très schématiquement, un exemple d'un outil de brunissage 300 comprenant un élément de bille de roulement 302 maintenu dans une embase 304. L'élément de bille 302 peut être, par exemple et sans limitation, supporté de manière hydrostatique par du fluide sous pression afin être librement mobile dans l'embase 304, comme cela est bien connu dans l'état de la technique. Au lieu d'un élément à bille dans une embase, un élément de rouleau rotatif (non représenté) ou un bout émoussé ou arrondi fixe (c'est-à-dire statique) peut également être utilisé.

Dans le cas d'un outil de brunissage utilisant un élément à bille de roulement, la force (c'est-à-dire la charge) appliquée par l'outil peut dépendre de plusieurs facteurs, incluant le diamètre de l'élément à bille, la matière de l'élément à bille, et la pression du fluide supportant l'élément à fluide. La force peut également dépendre de et être commandée par la manière selon laquelle l'outil est monté, par exemple, sur une table d'outillage, un bras robotique, etc.

Comme cela a été mentionné ci-dessus, il peut être souhaitable de brunir les deux côtés d'une partie de profil d'aile en même temps selon la présente invention, pour éviter particulièrement la déformation due à la pression de brunissage qui est appliquée seulement sur un côté d'un profil d'aile. Ainsi, la figure 4 illustre, très schématiquement, un agencement de brunissage qui permet le brunissage des deux côtés. Dans la figure 4, deux outils de brunissage 300a, 300b sont prévus. Les outils de brunissage 300a, 300b ont chacun une structure générale analogue à l'outil 300 de la figure 3, par exemple, ou analogue à n'importe quel outil de brunissage connu, de sorte qu'une explication détaillée est omise ici. Dans un agencement particulier, les outils 300a, 300b sont montés sur un appareil en forme d'étrier (non représenté ici) de telle sorte qu'une partie d'élément d'aube générique 306 est disposée entre eux. De préférence, les éléments de bille respectifs 302a, 302b (ou, plus généralement, les points respectifs où les outils entrent en contact avec la partie d'élément d'aube 306, si des éléments de bille ne sont pas utilisés) sont orientés de sorte qu'ils s'opposent sensiblement sur des côtés opposés de la partie d'élément d'aube 306.

## Revendications

1. Procédé de réparation d'un élément d'aube métallique endommagé (10; 100) comportant le fait de :
enlever une partie endommagée (20, 22; 200, 220, 221) de l'élément d'aube (10; 100);
remplacer la partie endommagée (20, 22; 200, 220, 221) par une partie de remplacement (20", 22"; 260); et
souder la partie de remplacement (20", 22"; 260) en place;
**caractérisé en ce qu'**au moins une zone soudée (28, 30; 240") de l'élément d'aube (10; 100) grâce à laquelle la partie de remplacement (20", 22"; 260) est fixée en place est brunie.

2. Procédé selon la revendication 1, **caractérisé en ce que** le brunissage comprend un roulage profond.

3. Procédé selon l'une quelconque des revendications 1 et 2, **caractérisé en ce que** le brunissage comporte un brunissage à bille.

4. Procédé selon la revendication 3, **caractérisé en ce qu'**au moins la zone soudée (28, 30; 240") de l'élément d'aube (10; 100) grâce à laquelle la partie de remplacement (20", 22"; 260) est fixée en place est galetée avec un outil ayant un élément de bille mobile (300, 300a, 300b) destiné à appliquer une pression.

5. Procédé selon la revendication 4, **caractérisé en ce que** l'outil comporte un élément de bille mobile (302, 302a, 302b) supporté de manière hydrostatique dans une embase (304, 304a, 304b).

6. Procédé selon l'une quelconque des revendications 1 à 5, **caractérisé en ce qu'**il comprend en outre le grenaillage d'au moins une partie de la zone soudée (28, 30; 240") après le brunissage.

7. Procédé selon l'une quelconque des revendications 1 à 6, **caractérisé en ce que** l'enlèvement de la partie endommagée (20, 22; 200, 220, 221) de l'élément d'aube (10; 100) comprend le fraisage de la partie endommagée (20, 22; 200, 220, 221) de l'élément d'aube (10; 100).

8. Procédé selon l'une quelconque des revendications 1 à 6, **caractérisé en ce que** l'enlèvement de la partie endommagée (20, 22; 200, 220, 221) de l'élément d'aube comprend la découpe de l'élément d'aube (10; 100).

9. Procédé selon l'une quelconque des revendications 1 à 8, **caractérisé en ce que** l'enlèvement de la partie endommagée (20, 22; 200, 220, 221) de l'élément d'aube (10; 100) comprend l'enlèvement d'une partie (20', 22') de l'élément d'aube correspondant au moins en taille ou en forme à l'endommagement (20, 22) présent.

10. Procédé selon l'une quelconque des revendications 1 à 8, **caractérisé en ce que** l'enlèvement de la partie endommagée (20, 22; 200, 220, 221) de l'élément d'aube (10; 100) comporte l'enlèvement d'une partie distale (223) de l'élément d'aube (10; 100) le long d'un plan globalement transversal à une direction (A) dans laquelle s'étend l'élément d'aube (10; 100).

11. Procédé selon l'une quelconque des revendications 1 à 10, **caractérisé en ce que** les deux côtés de l'élément d'aube (10; 100) sont brunis simultanément.

12. Procédé selon l'une quelconque des revendications 1 à 11, **caractérisé en ce qu'**il comporte en outre l'usinage de la partie de remplacement soudée afin de conformer la partie de remplacement (20", 22"; 260) à l'élément d'aube (10; 100).

13. Procédé selon la revendication 12, **caractérisé en ce que** l'usinage de la partie de remplacement soudée (20", 22"; 260) comporte au moins un fraisage ou un meulage manuel.

14. Procédé de réparation d'un élément d'aube métallique endommagé d'un disque à aubes monobloc d'une turbomachine selon les revendications 1 à 12.
